# EUROPÄISCHE PATENTANMELDUNG

(11) **EP 1 712 876 A2**
(43) Veröffentlichungstag der Anmeldung: **18.10.2006**
(21) Anmeldenummer: 06006514.1
(22) Anmeldetag: 29.03.2006
(51) Int. Cl.: G01B 21/14

(54) **Extendierbare Distanzvorrichtung**

(30) Priorität: 12.04.2005 DE 102005017053
(71) Anmelder: Prüftechnik Dieter Busch AG, 85737 Ismaning (DE)
(72) Erfinder: Hermann, Michael, 78048 Villingen (DE); Landmann, Werner, 85737 Ismaning (DE)

(57) **Zusammenfassung**

Eine Distanzvorrichtung zur laseroptischen Vermessung von Hohlzylindern besitzt mindestens zwei, bevorzugt drei miteinander verkoppelte oder verschränkte Arme, welche gegeneinander bewegt werden können. Die Arme besitzen endständige Meßrollen, welche innerhalb des Hohlzylinders zur Anlage gebracht und dort ggf abgerollt werden. An der Distanzvorrichtung wird ein Instrumententräger angebracht, so dass an zentraler Position des Instrumententrägers ein Licht-Sender (e.g. Laser) und/oder -Empfänger oder -Reflektor anbringbar ist. Die Vorrichtung dient dazu, die räumliche Lage der zu vermessenden Hohlzylinder zu ermitteln.

## Beschreibung

Die vorliegende Erfindung betrifft eine Distanzvorrichtung. Die erfindungsgemäße Distanzvorrichtung ist besonders dafür geeignet, als Distanzstück im Sinne der der EP 0 543 971 zu dienen. Insbesondere kann die Distanzvorrichtung zur Vermessung von Hohlzylindern und deren Relativlage zu einer Bezugsachse Verwendung finden. Die erfindungsgemäße Distanzvorrichtung ist extendierbar und kann deswegen ebenso zur Vermessung von hohlzylindrischen Gegenständen nach dem Gegenstand der EP 1083402 B dienen. Zur Vermeidung von Wiederholungen wird auf die genannten Patentschriften verwiesen.

Aufgabe der Erfindung ist es, eine Distanzvorrichtung zur Vermessung von Hohlzylindern zu schaffen, die sich ein einfacher und dennoch mechanisch stabiler Weise an unterschiedliche Durchmesser der Hohlzylinder anpassen läßt und sich im Vergleich zu kommerziell erhältlichen Vorrichtungen dieser Art durch einen signifikanten Kostenvorteil auszeichnet.

Diese Aufgabe wird gemäß bevorzugten Ausführungsformen der Erfindung dadurch gelöst, daß eine Anordnung mit genau drei Armen (10, 20, 30) vorgesehen ist, wobei die Arme vermittels Schlitzen (12, 22, 32) und/oder Stegen (16, 26, 36) oder vergleichbarer Konstruktionselemente ineinander zyklisch verkoppelt und gegeneinander unter Einhaltung eines Relativwinkels von ca. 60° relativ zueinander verschiebbar sind. Bevorzugt befinden sich je ein oder mehrere, am jeweiligen Ende eines Armes angebrachte Meßräder oder -rollen zur Kontaktierung der Oberfläche eines zu vermessenden Hohlzylinders. - Speziell werden in einer weiteren Ausgestaltung der Erfindung zwei solche Anordnungen in axialer Richtung unter Zuhilfenahme von drei Streben, Verbindungsstücken oder dgl. miteinander montiert d.h. zu einer sich in Achsrichtung erstreckenden Einheit zusammengesetzt, sodaß ein verbleibender axialer Verkippwinkel der Anordnung innerhalb eines zu vermessenden Hohlzylinders reduziert wird.

Die Distanzvorrichtung kann aus massivem Material gefertigt sein oder wird durch Zusammenfügen von je Hälften oder Anteilen einzelner Teil-Stücke hergestellt. Mit Vorteil wird die Distanzvorrichtung aus Teilen zusammengesetzt, welche aus Aluminium- oder Stahl-Hohlprofilen von rechteckigem Querschnitt geschnitten sind.

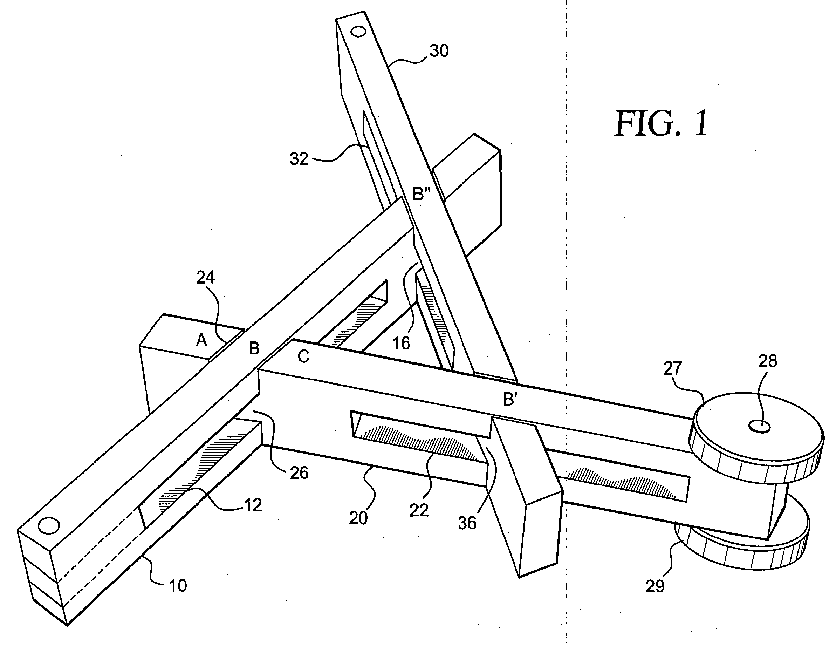

Die Erfindung wird im Folgenden anhand der Zeichnungen Fig. 1 bis Fig. 6 erläutert.

Aus Fig. 1 ist folgendes ersichtlich: Damit die Distanzvorrichtung innerhalb eines Hohlzylinders um ihre Hochachse rotierbar ist, sind Meß-Räder, Walzen oder dgl. (27, 29) vorgesehen, bevorzugt insgesamt 6 Stück solcher Räder, von denen in der Figur lediglich 2 Stück gezeichnet sind und die restlichen sinngemäß ergänzt zu sehen sind Die Meß-Räder sind bevorzugt als Kugellager ausgeführt. Die Räder 27, 29 sind mittels einer Achse 28 am Ende eines Arms 20 montiert, bzw ebenso an den Enden der Arme 20, 30 angebracht. Es sind genau drei Arme vorgesehen, damit eine exakte Anpassung der Räder an die Kontur und Oberfläche eines zu vermessenden Hohlzylinders vorgenommen werden kann. Die drei Arme 10, 20, 30 sind gegeneinander verschieblich angeordnet. Hierzu dienen Schlitze wie durch Bezugszeichen 24 gekennzeichnet sowie Stege 16, 26 und 36, die in die einzelnen Arme 10, 20 resp. 30 eingearbeitet sind. Die Schlitze 24 etc. müssen deutlich breiter gehalten werden, als es der entsprechende Dimension des jeweiligen Armes entspricht. Damit wird ein Klemmen der Arme gegeneinander vermieden, wenn die Distanzvorrichtung extendiert oder zusammengeschoben werden soll, um die gewünschte Anpassung an den Durchmesser eines zu vermessenden Hohlzylinders, oder Teilen davon, vorzunehmen.

Zur Fixierung der Arme gegeneinander ist eine Klemmvorrichtung vorgesehen (nicht gezeigt), welche z.B, in Form einer oder mehreren Laschen ausgeführt ist, welche an den Punkten A und C befestigt sein kann und eine Klemmschraube aufweisen kann, welche zur Fixierung der Arme gegeneinander den Punkt B kontaktieren. Mit gleichartigen Klemmvorrichtungen können auch die Punkte B' oder B" kontaktiert werden.

Innerhalb des von den Armen 10, 20 und 30 gebildeten Dreiecks kann eine meßtechnische Sensorik oder Vorrichtung, oder ein Lichtstrahlsender, speziell ein Laserstrahler angebracht werden. Anstelle eines Lichtstrahlsenders kann auch eine lichtreflektierende Vorrichtung oder ein anderes optisches Element vorgesehen sein, zum Beispiel ein reflektierendes Glasprisma.

Es ist ersichtlich, daß die gezeigte Ausführungsform bei geringem Materialaufwand und Gewicht eine vergleichsweise hohe Stabilität aufweist.

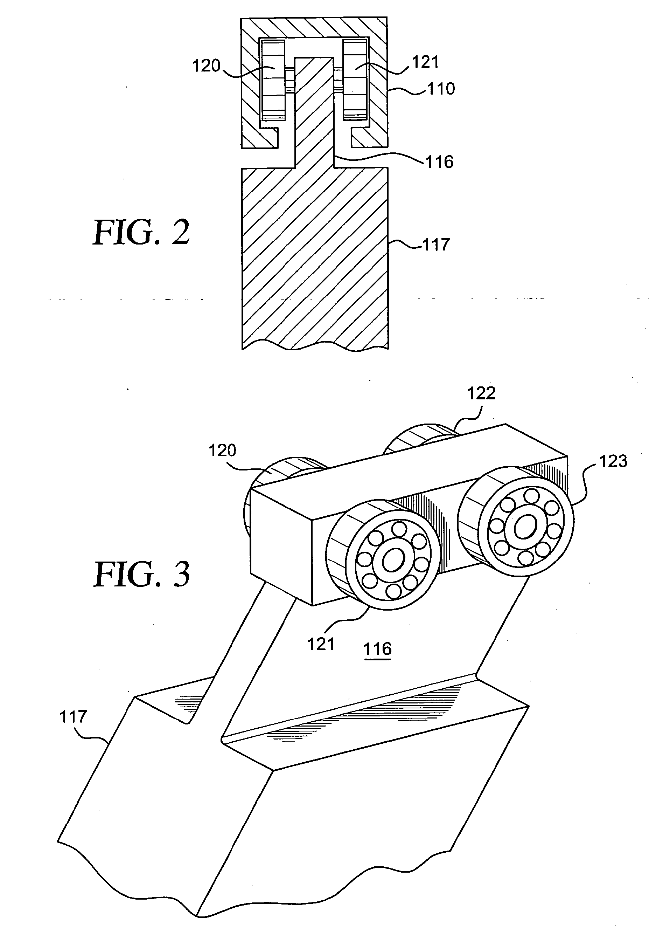

In einer anderen Ausführungsform der Erfindung wird dafür gesorgt, daß die Arme der Vorrichtung mit möglichst wenig Reibung gegeneinander verschoben und somit extendiert bzw. zusammengezogen werden können. Wie in Fig. 2 und Fig. 3 gezeigt, werden die Arme der Distanzvorrichtung aus einem geschlitzten Hohlprofil 110 (sog. C-Profil) hergestellt und mittels Kugellagern 120, 121, 122, 123 oder anderen geeigneten Rädern gegeneinander beweglich und verschiebbar gemacht. Die Kugellager jeweils werden mittels eines geeigneten Steg-Teils 116 getragen. Jeder Arm 110 wird mit einem solchen Steg-Teil samt zugehörigen Kugellagern ausgestattet. Eine perspektivische Sicht auf eine geeignete Anordnung dieser Art wird in Fig. 3 gezeigt. Wie ersichtlich, wird ein Steg-Teil 116 bevorzugt aus massivem Material gefertigt. Es weist geeignete Montagevorrichtungen, Zusatzstücke 117 oder Bohrungen auf, so daß es an eine Endseite eines Arms 110 etc. montiert werden kann.

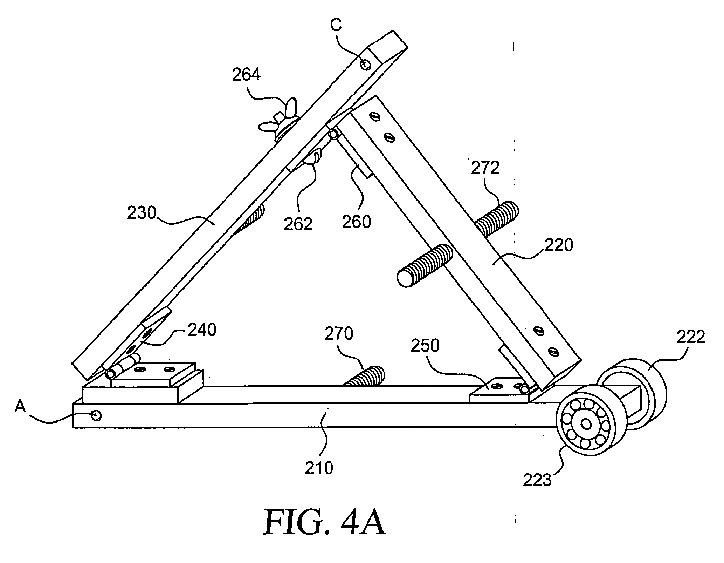

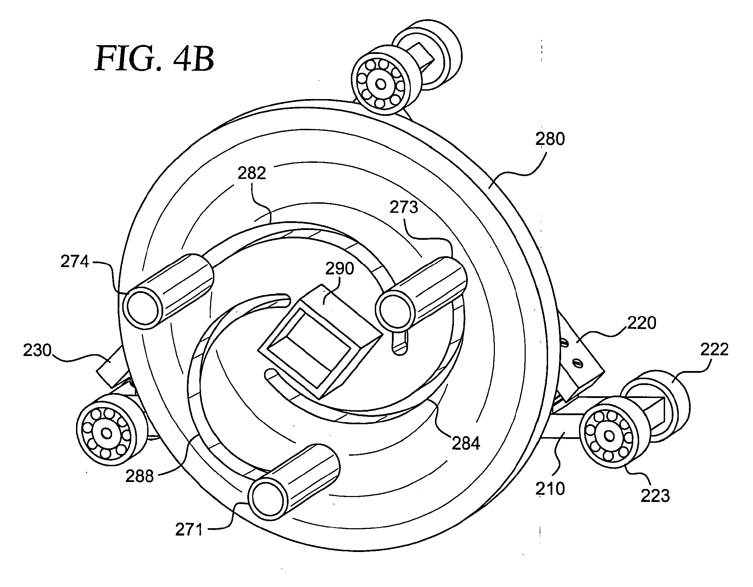

Eine weitere Ausihrungsforrn der Erfindung wird in Fig. 4 A und 4 B gezeigt. Diese Distanzvorrichtung zeichnet sich durch geringere Extensionsfähigkeit des wirksamen Umkreisradius aus, zum Beispiel von ca. 1 bis 2 % der Armlängen. Wie in den vorherigen Ausführungsformen auch, befinden sich Räder, Meßrollen oder Kugellager zum Abrollen innerhalb einer hohlzylindrischen Meßfläche am Ende der Arme, in diesem Falle der Arme 210, 220, 230. In Fig. 4 A werden lediglich Meßrollen 222, 223 gezeigt; entsprechende weitere Meßrollen sind an den Stellen A und C vorgesehen. Die Arme 210, 220, 230 sind mit Scharnieren 240, 250, 260 schwenkbar gegeneinander gehaltert. Arm 230 kann zum Beispiel mit Schlitzen oder Langlöchern versehen sein, so daß mittels einer Kombination aus einer oder mehreren Schrauben 262 und Flügelmuttern o.ä. 264 die wirksame Seitenlänge der Distanzvorrichtung in gewissem Umfange eingestellt werden kann. Bei beengten Raumverhältnissen kann eine entsprechend wirksame Feststellvorrichtung auch von der Seite der dreiarmigen Anordnung bedienbar sein. - Bolzen 270, 272 und weitere (nicht gezeigt) dienen zur Aufnahme und zum Festspannen (beispielsweise ebenfalls mittels Flügelmuttern, nicht gezeigt) eines Instrumenträgers. Auf diesem Instrumententräger können Lichtsender, bevorzugt in Form grünleuchtender, in Achsrichtung des zu vermessenden Hohlzylinders strahlender Laserstrahlvorrichtungen, oder zweidimensional sensierende Licht-Empfangsvorrichtungen angeordnet werden. Letztere werden in an sich bekannter Weise an zugehörige elektronische Auswertevorrichtungen geschaltet. Es ist von Vorteil, wenn der Instrumententräger mit elektronischen Inclinometem ausgestattet ist, damit eine Drehstellung der Distanzvorrichtung innerhalb des Hohlzylinders sensiert werden kann. - Bei der Vermessung nicht horizontal ausgerichteter Hohlzylinder kann der Meßwert solcher Inclinometer mittels einer Korrekturfunktion auf den tatsächlichen Drehwinkel des Instrumententrägers relativ zur Achse des zu vermessenden Hohlzylinders umgerechnet werden.

Weitere bzw. entsprechende Ausgestaltungen der Erfindung werden in Fig. 4 B gezeigt, wo neben den mit Meßrädem- oder -rollen ausgestatteten Armen 210, 220, 230 ein Instrumententräger 280, hier beispielsweise in Form einer kreisrunden Scheibe dargestellt ist. Mit Vorteil weist der Instrumententräger 280 spiralig angeordnete Langlöcher oder Schlitze 282, 284, 288 auf, durch welche die genannten Bolzen 270, 272 etc. gesteckt werden. Die Bolzen, mithin auch die Arme 210 etc., können dann mittels der Spannmuttern 271, 273 und 274 relativ zum Instrumententräger 280 stabil fixiert werden.

In Fig. 4B wird weiterhin gezeigt, wie ein optisches Element, beispielsweise ein reflektierendes Prisma 290 (englisch: right angle prism) zentrisch auf dem Instrumententräger 280 fest, aber austauschbar, angebracht ist.

In einer weiteren Ausgestaltung der Erfindung wird eine Vorrichtung vorgesehen, welche eine Abwandlung der in Fig. 4 A und 4 B dargestellten Anordnung betrifft Gemäß dieser Abwandlung werden lediglich 2 Arme 210 und 230 vorgesehen, welche wie in Fig. 4 mit einem Scharnier oder dgl. 240 klappbar verbunden sind. Ebenfalls sind an den Positionen A und C sowie am anderen Ende des Armes 210 entsprechende Präzisionsrollen 222, 223, bevorzugt aber nicht notwendigerweise paarweise, angebracht. Weiterhin sind Befestigungselemente ähnlich 270, 272 aus Fig.- 4 vorgesehen, an denen ein oder mehrere, bevorzugt flächige Instrumententräger befestigt werden können, welche insbesondere geeignet sind, als Adapter für einen Lichtstrahlsender zu funktionieren. Um ein stabiles Anliegen aller Präzisionsrollen an den zu vermessenden Hohlzylinder zu bewirken, ist ein oder mehrere Bauteile mit federnder Wirkung vorgesehen. Dieses Bauteil oder Feder wirkt auf die Arme 210, 230 extendierend ein, so daß stets ein bestmöglicher Kontakt der Präzisionsrollen an den Hohlzylinder vorhanden ist. Auf diese Weise ist auch die Vermessung von Hohlzylindern mit variabler Querschnittsfläche oder nicht vollständig rundem Querschnitt möglich. Es ist von Vorteil, das Bauteil mit federnder Wirkung in der Nähe des Scharniers o.dgl. 240 zu plazieren. Darüberhinaus ergeben sich weitere Anbringungsmöglichkeiten für ein solches Bauteil mit federnder Wirkung, zum Beispiel die Befestigung eines Endes an zumindest einem vorgesehenen Instrumententräger. Das andere Ende der Feder kann dann auf einen oder beide Arme 210, 230 einwirken. Dieses Bauteil mit federnder Wirkung (Feder) ist somit geeignet, auf die Arme (210, 230) eine spreizende Kraft auszuüben. Infolgedessen kontaktieren die Arme der erfindungsgemäßen Vorrichtung mittels der Präzisionsrollen praktisch spielfrei die zu vermessende Oberfläche, auch an solchen Stellen, wo deren Gestalt von einer Idealform abweicht.

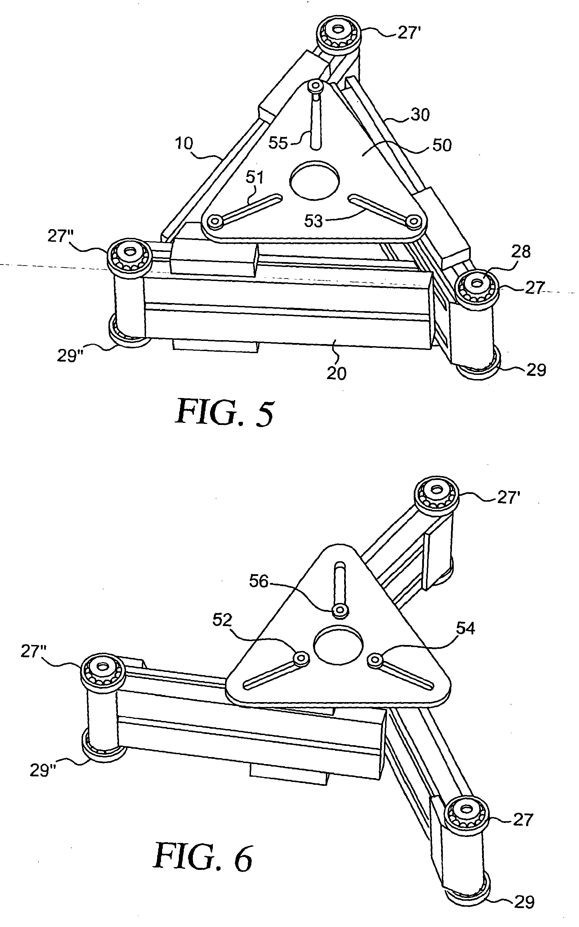

In Fig. 5 und 6 wird eine bevorzugte Ausgestaltung der Erfindung gezeigt, und zwar im kontrahierten bzw. im expandiertern Zustand. Die aus einem geeigneten Aluminium-Strangprofil hergestellten Arme 10, 20 und 30 sowie die Meßrollen 27, 29 entsprechen denen der Fig. 1. Der Instrumententräger 50 ist mit Langlöchern 51, 53, 55 versehen, welche in Zusammenspiel mit Arretierschrauben 52, 54 und 56 ebenfalls eine Fixierung der Arme 10, 20, 30 relativ zueinander bewirken - Es sind Laufrollen in Form von Kugellagern ähnlich denen aus Fig. 2 vorgesehen, allerdings ist der in Fig. 2 gezeigte Schlitz für stegartige Halterungen nunmehr pro Arm jeweils doppelt vorhanden, und zwar beidseitig an den Seitenflächen der Arme 10, 20, 30.

## Patentansprüche

1. Distanzvorrichtung, insbesondere zur Vermessung der Lage von Hohlzylindern, **gekennzeichnet durch** eine Anordnung von genau drei Armen (10, 20, 30), welche vermittels Schlitzen (12, 22, 32) und/oder Stegen (16, 26, 36) ineinander zyklisch verkoppelt und gegeneinander unter Einhaltung eines Relativwinkels von ca. 60° relativ zueinander verschiebbar sind, sowie **durch** je ein oder mehrere am jeweiligen Ende eines Armes angebrachten Meßrädern oder -rollen zur Kontaktierung der Oberfläche eines zu vermessenden Hohlzylinders.

2. Distanzvorrichtung nach Anspruch 1, mit einer vordefinierten Breite eines Schlitzes 24, welche das Klemmen bei einer Bewegung der Arme (10, 20, 30)relativ zueinander verhindert.

3. Distanzvorrichtung nach einem der vorhergehenden Ansprüche, deren Arme aus Aluminium- oder Stahlprofilrohren mit rechteckigen, insbesondere quadratischen Querschnitten hergestellt sind.

4. Distanzvorrichtung nach Anspruch 3, deren Arme aus längsgeschlitzten Aluminium- oder Stahlprofilrohren hergestellt sind.

5. Distanzvorrichtung nach einem der vorhergehenden Ansprüche, geeignet zur zentrischen Aufnahme eines Lichtstrahlsenders oder einer meßtechnischen Vorrichtung.

6. Distanzvorrichtung nach einem der vorhergehenden Ansprüche, bei der eine leichtgängige Verfahrbarkeit und Bewegung der Arme relativ zueinander durch endseitig an den Armen 10, 20, 30 angebrachte kontaktierende Kugellager (120, 121) geschaffen ist oder bereitgestellt wird.

7. Distanzvorrichtung, bestehend aus drei mit Scharnieren (240, 250, 260) miteinander verbundenen Armen, an deren Enden eine oder mehrere Meßrollen (222, 223) oder dergleichen befestigt sind, mit Befestigungsvorrichtungen (270, 272) zur Aufnahme eines Instrumententrägers oder einer Vorrichtung zum Aussenden von Lichtstrahlen oder eines optischen Bauteils.

8. Distanzvorrichtung nach Anspruch 7, deren wirksamer Umkreisradius variiert werden und mittels einer in einem Langloch geführten Kombination aus Schraube (262) und Mutter fixiert werden kann.

9. Distanzvorrichtung, bestehend aus zwei mit mindestens einem Scharnier (240) oder dgl. miteinander verbundenen Armen (210, 230), an deren Enden eine oder mehrere Meßrollen (222, 223) oder dergleichen befestigt sind, mit Befestigungsvorrichtungen (270) zum Anbringen eines Instrumententrägers oder einer Einrichtung zum Aussenden oder Empfangen von Lichtstrahlen oder eines optischen Elementes; und einem Bauteil mit federnder Wirkung (Feder) welches geeignet ist, auf die Arme (210, 230) eine spreizende Kraft auszuüben.
